Europäisches Patentamt

European Patent Office

Office européen des brevets

(11) Veröffentlichungsnummer : **0 007 542**
**B1**

# (12) EUROPÄISCHE PATENTSCHRIFT

(45) Veröffentlichungstag der Patentschrift :
14.09.83

(21) Anmeldenummer : 79102449.0

(22) Anmeldetag : 16.07.79

(51) Int. Cl.³ : **C 08 J  5/12**, B 29 H  9/10,
C 08 L  21/00, C 08 K  5/48,
B 60 C  9/00

(54) **Verfahren zum direkten Verbinden von Kautschuk mit Metalloberflächen, Kautschukmasse und Cord für Kraftfahrzeugreifen.**

(30) Priorität : 21.07.78 DE 2832235

(43) Veröffentlichungstag der Anmeldung :
06.02.80 Patentblatt 80/03

(45) Bekanntmachung des Hinweises auf die Patenterteilung : 14.09.83 Patentblatt 83/37

(84) Benannte Vertragsstaaten :
AT BE FR GB IT

(56) Entgegenhaltungen :
DE A 2 251 318
US A 3 424 270

**Die Akte enthält technische Angaben, die nach dem Eingang der Anmeldung eingereicht wurden und die nicht in dieser Patentschrift enthalten sind.**

(73) Patentinhaber : Heckmann, Klaus, Prof. Dr.
Zum Aichahof 20
D-8400 Regensburg (DE)

(72) Erfinder : Dobias, Bohuslav, Dr.
Alfons-Auer-Strasse 16b
D-8400 Regensburg (DE)  ·
Erfinder : Heckmann, Klaus, Prof. Dr.
Zum Aichahof 20
D-8400 Regensburg (DE)

(74) Vertreter : Kraus, Walter, Dr. et al
Patentanwälte Dres. Kraus & Weisert Irmgardstrasse
15
D-8000 München 71 (DE)

Jouve, 18, rue St-Denis, 75001 Paris, France

# Verfahren zum direkten Verbinden von Kautschuk mit Metalloberflächen, Kautschukmasse und Cord für Kraftfahrzeugreifen

## Beschreibung

Die Erfindung betrifft ein Verfahren zum direkten Verbinden von Kautschuk mit Metalloberflächen. Eine gute Haftung von Naturkautschuk an Metall ist für zahlreiche Zwecke wünschenswert, besonders jedoch bei der Herstellung von Fahrzeugreifen mit Metallcordeinlagen. In diesem Fall ist es wichtig, daß die Bindung zwischen dem Metall und dem Kautschuk eine möglichst hohe Haftfestigkeit, Elastizität und Lebensdauer aufweist.

Nur so können optimale Fahreigenschaften und insbesondere eine hohe Fahrsicherheit von Fahrzeugreifen erreicht werden. Mangelnde Haftfestigkeit und Elastizität der Bindung Metall : Kautschuk führen zu vorzeitiger Zerstörung des Reifenkörpers.

Als Haftvermittler für die Haftung von Kautschukmischungen an Metalloberflächen wurden bisher neben Schwefel in erster Linie Eiweißstoffe, Resorcin-Formaldehyd, Polyisocyanate, Schwermetallsalze organischer Säuren, calcinierte Schwermetallsalze organischer Säuren, Eisenoxid und 2-(2,4-Dinitrophe-nylthio)-benzthiazol, Schwermetallsalze der Hydroxybenzoesäure sowie Co-Naphthenate herangezogen.

Die Verwendung von Tellur, Tellurlegierungen oder Tellurverbindungen als Haftvermittler ist nicht bekannt.

In der IT-PS 378 711 wird ein Verfahren beschrieben, bei dem Kautschuk und Metall über eine Zwischenschicht dauerhaft miteinander verbunden werden. Das Aufbringen einer Zwischenschicht auf den Metallcord bedingt jedoch erhöhten technischen Aufwand sowie erhöhte Investitionen und Produktionskosten bei der Reinfenherstellung und stellt außerdem eine zusätzliche Fehlerquelle dar.

In der DE-OS 2 251 318 wird ein Verfahren zum Verbinden von Kautschuk mit Metall mittels eines Bindemittels durch Vulkanisation beschrieben. Das Bindemittel besteht aus einem halogenisierten Elastomeren und einem Vernetzungsmittel. Als Vernetzungsmittel können Thiuramsulfide oder die Dithiocarbamate von Zink, Wismuth, Nickel, Kobalt, Blei, Kupfer, Quecksilber, Eisen, Selen und Tellur verwendet werden. Es handelt sich hierbei um Metallsalze der Dithicarbaminsäure, und die Metalle liegen darum als Kationen vor. Die wesentliche Komponente des Vernetzungsmittels ist das Dithiocarbamat, nicht jedoch das Metallkation.

Das aus der DE-OS 2 251 318 bekannte Verfahren besitzt auch den Nachteil, daß man bestimmte halogenierte Elastomere und Bindemittel benötigt.

In der FR-PS 960 629 wird ein Verfahren zur Erzielung guter Haftfestigkeit zwischen Metall und Kautschukmischung beschrieben, bei dem sehr hohe Anteile von Schwermetallverbindungen und Schwefel in der Kautschukmischung verwendet werden. Bei diesem Verfahren entsteht jedoch ein Hartkautschuk, der für Fahrzeugreifen nicht geeignet ist.

In der DE-AS 1 130 159 wird ein Verfahren zur Verbesserung der Haftfestigkeit von Metall an Kautschuk beschrieben, bei dem eine vulkanisierbare Kautschukmischung an einem Metall in Gegenwart eines Schwermetallsalzes einer organischen Säure vulkanisiert wird, wobei das Schwermetallsalz in teilweise calciniertem oder oxydiertem Zustand verwendet wird. Der Nachteil dieses Verfahrens ist, daß der Calcinierungsprozeß die genannten Zusätze so verteuert, daß ihre Verwendung bei der Massenproduktion von Reifen unwirtschaftlich ist. Außerdem sind die mit diesem Verfahren erreichten Haftfestigkeiten nicht ausreichend und insbensondere nicht für Reifen, die bei hoher Geschwindigkeit benutzt werden.

In der DE-PS 1 570 151 wird die Zugabe von Eisenoxid und 2-(2,4-Dinitrophenylthio)-benzthiazol zum Naturkautschuk zusätzlich zu den für die Schwefelvulkanisation notwendigen und üblichen Zutaten zur Kautschukmischung beschrieben. Auch die bei diesem Verfahren erzielten Haftfestigkeiten reichen für Reifen nicht aus, die hoher Beanspruchung unterliegen, und insbesondere für solche Reifen, die bei hohen Geschwindigkeiten verwendet werden sollen.

In der DE-OS 26 16 613 wird gezeigt, daß durch die Zugabe von Metallsalzen der Hydroxybenzoesäure zu einer Kautschukmasse deren Haftfestigkeit an vermessingtem Stahlcord nach der Vulkanisation verbessert und die Beeinträchtigung der Hafteigenschaften durch Hitzealterung verringert wird. Verwendet man die in der DE-OS 26 16 613 beschriebene Kautschukmasse zum Herstellen von Stahlcordreifen, so zeigt sich, daß die Haftfestigkeit ungenügend ist und daß sich die Haftfestigkeit bei Alterung in der Hitze verschlechtert.

In Ullmann Enzyklopädie der Technischen Chemie, 9. Band, Urban und Schwarzenberg, München-Berlin 1957, werden auf Seite 382 Vulkanisiermittel für die Kaltvulkanisation und für die Heißvulkanisation angegeben. Bei der Kaltvulkanisation wird ausgeführt, daß sich die Anwendung von Tellurchlorid unter anderen Verbindungen zur Vulkanisation von Kautschuk anstelle von Schwefelchlorid nicht in der Praxis eingeführt hat. Bei der Heißvulkanisation wird angegeben, daß auch Selen und Tellur für die Vulkanisation von Kautschuk verwendet wurden, daß aber die Wirkung dieser Produkte schwächer ist als die von Schwefel. Auf Seite 385 wird weiterhin angegeben, daß die Tellursalze von N-Dialkyl-N-alkylaryldithiocarbaminsäuren als organische Beschleuniger verwendet werden können, daß diese Salze jedoch technisch kaum angewendet werden. Es finden sich keinerlei Hinweise, daß Tellur, Tellurlegierungen oder Tellurverbindungen als Mittel zur Haftverbesserung zwischen Metalloberflächen und Kautschuk dienen können.

Der vorliegenden Erfindung liegt die Aufgabe zugrunde, ein Verfahren für das Verbinden von Kautschukmischungen mit Metalloberflächen, insbesondere mit Metallcord zu schaffen, das die Nachteile der bekannten Verfahren nicht besitzt und mit dem insbesondere bessere Haftfestigkeiten zwischen Kautschuk und Metall erhalten werden. Das erfindungsgemäße Verfahren soll weiterhin gut reproduzierbar sein und möglichst wenig Fehlerquellen aufweisen sowie niedrige Investitions- und Produktionskosten verursachen.

Gegenstand der Erfindung ist ein Verfahren zum direkten Verbinden von Kautschuk mit Metalloberflächen durch Vulkanisation unter Verwendung einer Kautschukmischung, der auch die für die Schwefelvulkanisation üblichen Zusätze beigemengt sind, das dadurch gekennzeichnet ist, daß entweder die Kautschukmischung zusätzlich Tellur, Tellurlegierungen, Metalltelluride, nichtstöchiometrische Tellurmetallverbindungen und/oder organische Tellurverbindungen als Haftvermittler enthält oder aber daß das Tellur, die Tellurlegierung, Metalltelluride, nichtstöchiometrische Tellurmetallverbindungen und/oder die organische Tellurverbindung vor dem Vulkanisieren auf die Metalloberfläche aufgebracht wird.

Überraschenderweise wurde gefunden, daß durch die Zugabe von Tellur zu dem üblicherweise bei der Schwefelvulkanisation verwendeten Kautschukgemisch die Haftfestigkeit zwischen Metall und Kautschuk wesentlich erhöht werden kann. Es wurden Verbesserungen bis zu 100 % gefunden. Die Bedeckung der Metalloberfläche mit Kautschuk nach dem Ausreißen eines Metalldrahts aus einer vulkanisierten Probe ist praktisch vollständig. Die wirkliche Haftfestigkeit ist demnach höher als die gemessene Haftfestigkeit. Die durch Zugabe von Tellur, Tellurlegierungen oder Tellurverbindungen erzielte gute Haftfestigkeit bleibt auch nach der Alterung der Metall-Kautschuk-Verbindung und unter korrosiven Bedingungen weitgehend erhalten. Das erfindungsgemäße Verfahren eignet sich insbesondere für die Herstellung von Kraftfahrzeugreifen, Reifen für Flugzeuge, Transportbänder, Antriebsriemen, V-Riemen und Schläuche, die hohen Beanspruchungen ausgesetzt sind.

Als Kautschukmischungen kann man alle Arten von Kautschukmischungen verwenden, die normalerweise mit Metall verbunden werden. Man kann Naturkautschuk oder Synthesekautschuk einsetzen, und die bei dem erfindungsgemäßen Verfahren verwendeten Kautschukmischungen enthalten alle Zusatzstoffe, die üblicherweise bei der Vulkanisation und insbesondere bei der Herstellung von Reifen verwendet werden. Die Kautschukmischung kann auch zusätzliche Haftvermittlungssysteme enthalten. In diesem Fall tritt bei Verwendung des Tellur-Systems eine weitere Erhöhung der Haftfestigkeit ein. Als Metall kann man sämtliche Metallarten, wie Eisen, Kupfer, Messing, Zink, Aluminium oder Bronze, einsetzen, die mit Kautschuk verbunden werden sollen. Vorzugsweise wird jedoch Metallcord verwendet, insbesondere vermessingter Stahlcord. Die Metalloberfläche, mit der die Kautschukmischung verbunden werden soll, muß sauber sein, d. h. frei von Metalloxiden, Staub, Öl, Fett sowie Feuchtigkeit. Darüberhinaus bedarf sie keiner zusätzlichen Reinigung. Das Verbinden zwischen Metall und Kautschuk erfolgt in an sich bekannter Weise.

Die Kautschukmasse kann beispielsweise nach Bedingungen hergestellt werden, wie sie aus « Encyclopedia of Polymer Science and Technology », Band 12, Seiten 161-353 (Kautschuk) ; ibid. Band 14, Seiten 42-64 (Reifen und Reifencords) ; ibid. Band 8, Seiten 184-185 (Reifencord-Tauchen) ; ibid. Band 14, Seiten 740-756 (Vulkanisation) ; « Rubber Chemistry and Technology », 46 (4), Seiten 981-998 (Gummi-Textil-Cord-Haftung und Gummi-Stahl-Cord-Haftung) ; Ullmanns Enzyklopädie der Technischen Chemie, 9. Band, Seiten 305-424, Urban und Schwarzenberg, München-Berlin 1957 ; sowie Ullmans Enzyklopädie der Technischen Chemie, Band 13, 4. neubearbeitete und erweiterte Auflage, Verlag Chemie, Weinheim-New York, Seiten 581-709, bekannt sind.

Als Haftvermittler wird Tellur, eine Tellurlegierung Metalltelluride, nichtstöchiometrische Tellurmetallverbindungen oder/und eine organische Tellurverbindung verwendet. Das Tellur kann als metallisches Tellur oder in Form seiner Legierungen, wie z. B. Ferrotellur und Tellurkupfer, verwendet werden. Verwendet man metallisches Tellur oder Tellurlegierungen, so werden diese vorzugsweise in Pulverform eingesetzt. Beispiele für Metalltelluride sind die Telluride von Eisen, Kobalt, Nickel, Kupfer, Wolfram, Blei, Zinn, Mangan und Zink. Beispiele für organische Tellurverbindungen sind Dialkyltelluride mit 1 bis 6, vorzugsweise 1 bis 4, besonders bevorzugt 1 bis 2 Kohlenstoffatomen in der Alkylgruppe. Beispiele für Telluride sind Di-n-butyltellur, Diäthyltellur, Dimethyltellur und Dimethyltelluridjodid. Als organische Tellurverbindungen kann man weiterhin Diarylditellurid, z. B. Diphenylditellurid, verwenden.

Die Menge an zu verwendendem Haftvermittler hängt von der Zusammensetzung der Kautschukmischung ab. Überraschenderweise hängt sie von dem Schwefelgehalt nicht ab. Man verwendet 0,01 bis 5 Gew.%, vorzugsweise 0,1 bis 2,5 Gew.%, am meisten bevorzugt 0,1 bis 1 Gew.%, Tellur, Tellurlegierung oder Tellurverbindung, bezogen auf die Kautschukmasse, wobei im Falle von Tellurlegierungen oder Tellurverbindungen deren Anteile als Gewichtsprozent Tellur angegeben sind. Überraschenderweise genügen in vielen Fällen sehr geringe Mengen an Tellur, z. B. im Bereich von 0,1 bis 0,5 Gew.%. So kann man sehr gute Ergebnisse erhalten, wenn man 100 bis 300 g Tellur/100 kg Kautschukmischung verwendet.

Die Erfindung betrifft weiterhin eine Kautschukmasse zum Aufvulkanisieren auf Metallmaterial, die dadurch gekennzeichnet ist, daß sie 0,01 bis 5 Gew.% Tellur, Tellurlegierungen, Metalltelluride, nichtstöchiometrische Tellurmetallverbindungen und/oder organische Tellurverbindungen, bezogen auf die Kautschukmasse enthält, wobei im Falle von Tellurlegierungen, Metalltelluride, nichtstöchiometrische Tellurmetallverbindungen und organische Tellurverbindungen deren Anteile als Gewichtsprozent Tellur angegeben sind. Für diese Kautschukmischung gelten alle die oben im Zusammenhang mit dem angesprochenen Verfahren gemachten Ausführungen.

Die erfindungsgemäße Kautschukmasse kann als Tellurverbindungen organische Tellurverbindungen und die nichtstöchiometrischen Tellurmetallverbindungen enthalten. Als Metalltelluride kann sie die Telluride von Eisen, Kobalt, Nickel, Kupfer, Wolfram, Blei, Zink, Zinn und Mangan enthalten, und als organische Tellurverbindungen kann sie Telluralkyle, die Di-n-butyltellur, Diäthyltellur, Dimethytelluridjodid oder Diphenylditellurid enthalten.

Sollen das Tellur, die Tellurlegierungen, die Metalltelluride, die nichtstöchiometrischen Tellurmetallverbindungen und/oder die organische Tellurverbindungen auf die Metalloberfläche aufgebracht oder die Tellurverbindungen auf der Metalloberfläche erzeugt werden, so kann dies z. B. durch galvanische Verfahren, durch Aufdampfen oder Aufschmelzen oder durch Tauchen geschehen oder durch Auftragen einer Paste, die man mit Hilfe einer geeigneten Flüssigkeit anrühren kann.

Das Aufbringen des Haftsystems auf die Metalloberfläche hat gegenüber dem Einbringen des Haftsystems in die Kautschukmischung zwei wesentliche Vorteile : erstens können die mechanischen Eigenschaften des Kautschuks und des Haftsystems unabhängig voneinander optimiert werden, was eine größere Flexibilität in der Wahl der Parameter des gesamten Systems gewährleistet, und zweitens ist der Verbrauch an Tellur, Tellurlegierungen und/oder Tellurverbindungen wesentlich geringer.

Die Erfindung betrifft weiterhin einen Metallcord für Kraftfahrzeugreifen zur Durchführung des oben beschriebenen Verfahrens, der dadurch gekennzeichnet ist, daß die einzelnen Drähte des Cords während ihrer Fertigung oder der Cord insgesamt vor dem Vulkanisieren oberflächlich mit Tellur, einer Tellurlegierung, Metalltelluride, nichtstöchiometrische Tellurmetallverbindungen und/oder einer organischen Tellurverbindung überzogen worden ist.

Reifen, die nach dem erfindungsgemäßen Verfahren hergestellt worden sind, zeigen eine wesentlich bessere Haftfähigkeit zwischen Metall und Kautschuk als Reifen, die nach bekannten Verfahren hergestellt worden sind. Dies ist nicht nur bei der Neuherstellung von Reifen von großer Bedeutung, da die Reifen höheren Geschwindigkeiten und härteren Bedingungen ausgesetzt werden können, sondern auch bei der Runderneuerung von Reifen.

Die Runderneuerung von Reifen kann heute vielfach nicht durchgeführt werden, da sich in den abgefahrenen Reifen die Bindung zwischen dem Kautschuk und dem Metall so weit verschlechtert hat, daß bei einer Runderneuerung der Reifen nicht mehr die in den Normen geforderten Haftfestigkeitswerte zwischen Metall und Kautschuk gewährleistet sind. Verwendet man das erfindungsgemäße Verfahren dagegen bei der Reifenherstellung, so ist auch nach Abfahren der Lauffläche von den Reifen die Bindung zwischen Gummi und Metallcord noch so gut und ausreichend, daß sich eine Runderneuerung der Reifen lohnt und daß auch die runderneuerten Reifen die geforderten Normen erfüllen.

Da das Tellurhaftsystem eine besonders hohe Stabilität gegenüber korrosiven Einflüssen aufweist, ist hier insbesondere die Runderneuerung von LKW-Reifen zu nennen.

Vergleicht man Kautschuk-Metallverbindungen, die nach dem beanspruchten Verfahren hergestellt wurden, mit solchen, die unter Verwendung der in der DE-OS 26 16 613 beschriebenen Kautschukmassen hergestellt wurden, so zeigt sich, daß die nach dem beanspruchten Verfahren hergestellten Metall-Kautschukbindungen eine bessere Haftfestigkeit zeigen als solche, die unter Verwendung der bekannten Kautschukmassen hergestellt wurden. In der DE-OS 26 16 613 werden auf Seite 7 in Tabelle 2 Retentionskoeffizienten angegeben, die in der Größenordnung von 68 bis 72 % liegen und durch Alterung während 72 Stunden bei 100 °C erhalten wurden. Die mit dem erfindungsgemäßen Verfahren erzielten Retentionswerte sind mit den in der DE-OS 26 16 613 genannten Retentionswerten numerisch vergleichbar ; sie wurden allerdings nach einer Hitzealterung bei 130 °C während 72 Stunden gewonnen. Die nach dem erfindungsgemäßen Verfahren erzielte Verbindung Metall/Kautschuk zeigt somit eine bessere Hitzebeständigkeit als die, die man gemäß der DE-OS 26 16 613 erhält.

Die folgenden Beispiele erläutern die Erfindung.

## Beispiel 1

Es wird eine Standard-Kautschukmischung mit relativ niedrigem Schwefelgehalt (3,00 %, bezogen auf den Kautschukgehalt, 1,65 %, bezogen auf die Fertigmischung) ohne und mit Haftvermittler, verwendet. Die verwendeten Mengen sind in der folgenden Tabelle I aufgeführt. Diese Mischung wird in Anlehnung an die ASTM zusammen mit Stahlcord ($7 \times 4 \times 0,175$ mm, vermessingte Oberfläche) für 15 Minuten bei 160 °C vulkanisiert. Die Länge der Einbettung beträgt 2,5 cm. Zwei Stunden nach der Vulkanisation wird der « Null »-Haftwert durch Ausreißen von Drähten aus der Probe bestimmt. Danach wird die vulkanisierte Probe einem Korrosionstest unterworfen. Dieser besteht darin, daß die Probe 16 Stunden lang bei 90 °C in gesättigtem Wasserdampf aufgehoben wird. Im Anschluß hieran wird nochmals der Haftwert bestimmt. Die Ergebnisse sind in Tabelle I zusammengefaßt :

# 0 007 542

Tabelle I

| Zugesetzte Menge an Haft-vermittler : Te in g/kg Fertigmischung | Haftwert (daN) | |
|---|---|---|
| | « Null » | nach Korrosion |
| 0,0 | 52 | 62 |
| 0,425 | 126 | 102 |
| 1,2 | 103 | 114 |
| 4,0 | 110 | 113 |
| 8,0 | 116 | 107 |

Beispiel 1 zeigt, daß mit dem Te-Haftsystem eine stabile Verbindung zwischen Metalloberflächen und Kautschukmischungen mit niedrigem Schwefelgehalt hergestellt werden kann. Dies ist ein großer Vorteil gegenüber anderen Haftsystemen, deren Wirksamkeit auf die Anwesenheit größerer Schwefelkonzentrationen angewiesen ist, wobei der erhöhte Schwefelgehalt infolge einer Nachhärtung des Kautschuks zu einem Abfall von Festigkeit, Bruchdehnung und Kerbzähigkeit führt.

Beispiel 2

Es wird wie in Beispiel 1 verfahren. Nur wird eine Kautschukmischung mit höherem Schwefelgehalt (7,5 %, bezogen auf den Kautschukgehalt, 4,05 %, bezogen auf die Fertigmischung) verwendet. Die Ergebnisse sind in Tabelle II zusammengefaßt :

Tabelle II

| Zugesetzte Menge an Haft-vermittler : Te in g/kg Fertigmischung | Haftwert (daN) | |
|---|---|---|
| | « Null » | nach Korrosion |
| 0,0 | 64 | 82 |
| 1,2 | 101 | 108 |
| 1,6 | 126 | 114 |
| 2,4 | 101 | 99 |
| 4,0 | 110 | 108 |

Beispiel 3

Es wird wie in Beispiel 1 verfahren. Nur wird eine Kautschukmischung mit sowohl höherem Schwefelgehalt (7,46 %, bezogen auf den Kautschukgehalt, 3,88 %, bezogen auf die Fertigmischung) als auch einem zusätzlichen Haftsystem (Resorzin, Formaldehyd, Kieselsäure) verwendet. Die Ergebnisse sind in Tabelle III zusammengestellt :

Tabelle III

| Zugesetzte Menge an 1. Haftvermittler : Resorzin/Formaldehyd/ Kieselsäure 2. Haftvermittler : Te jeweils in g/kg Fertigmischung | Haftwert (daN) | |
|---|---|---|
| | « Null » | nach Korrosion |
| 0,0 | 64 | 82 |
| 1. 98,6 | 106 | 76 |
| 2. 0,5 | 162 | 106 |

Beispiel 3 zeigt, daß die Zugabe des Te-Haftsystems zum Resorzin/Formaldehyd-Haftsystem dessen wesentlichen Nachteil, nämlich den Rückgang der Haftung aufgrund von Feuchtigkeitseinfluß nach der Vulkanisation, vollständig kompensiert.

5

**0 007 542**

**Ansprüche** (für die Vertragsstaaten : BE, FR, GB, IT)

1. Verfahren zum direkten Verbinden von Kautschuk mit Metalloberflächen durch Vulkanisation, dadurch gekennzeichnet, daß als Haftvermittler Tellur, Tellurlegierungen, Metalltelluride, nichtstöchiometrische Tellurmetallverbindungen und/oder organische Tellurverbindungen verwendet werden.

2. Verfahren nach Anspruch 1, dadurch gekennzeichnet, daß eine Kautschukmischung verwendet wird, die neben den für die Vulkanisation üblichen Zusätzen auch Tellur, Metalltelluride, nichtstöchiometrische Tellurmetallverbindungen, Tellurlegierungen und/oder organische Tellurverbindungen enthält.

3. Verfahren nach Anspruch 1, dadurch gekennzeichnet, daß Tellur, Tellurlegierungen, Metalltelluride, nichtstöchiometrische Tellurmetallverbindungen und/oder eine organische Tellurverbindung vor der Vulkanisation auf die Metalloberfläche aufgebracht werden.

4. Verfahren nach Anspruch 1 oder 2, dadurch gekennzeichnet, daß man zu der Kautschukmischung 0,01 bis 5 Gew.% Tellur, Tellurlegierung, Metalltelluride, nichtstöchiometrische Tellurmetallverbindungen und/oder eine organische Tellurverbindung, bezogen auf die Kautschukmischung, zugibt, wobei im Fall von Tellurlegierungen, Metalltelluriden, nichtstöchiometrischen Tellurmetallverbindungen und organischen Tellurverbindungen deren Anteile als Gewichtsprozent Tellur angegeben sind.

5. Verfahren nach einem der vorhergehenden Ansprüche, dadurch gekennzeichnet, daß als Metalltelluride die Telluride von Eisen, Kobalt, Nickel, Kupfer, Wolfram, Blei, Zink, Zinn und Mangan verwendet werden.

6. Verfahren nach einem der vorhergehenden Ansprüche, dadurch gekennzeichnet, daß als organische Tellurverbindungen Telluralkyle, wie Di-n-butyltellur, Diäthyltellur, Dimethyltellur, Dimethyltelluridjodid oder Diphenylditellurid, verwendet werden.

7. Kautschukmasse zum Aufvulkanisieren auf Metallmaterial, dadurch gekennzeichnet, daß sie neben den für die Vulkanisation üblichen Zusatzstoffen 0,01 bis 5,0 Gew.% Tellur, Tellurlegierungen, Metalltelluride, nichtstöchiometrische Tellurmetallverbindungen und/oder · organische Tellurverbindungen, bezogen auf die Kautschukmasse, enthält, wobei im Fall von Tellurlegierungen, Metalltelluriden, nichtstöchiometrischen Tellurmetallverbindungen und organischen Tellurverbindungen deren Anteile als Gewichtsprozent Tellur angegeben sind.

8. Kautschukmasse nach Anspruch 7, dadurch gekennzeichnet, daß sie als Metalltelluride die Telluride von Eisen, Kobalt, Nickel, Kupfer, Wolfram, Blei, Zink, Zinn und Mangan enthält.

9. Kautschukmasse nach Anspruch 7, dadurch gekennzeichnet, daß sie als organische Tellurverbindungen Telluralkyle, wie Di-n-butyltellur, Diäthyltellur, Dimethyltellur, Dimethyltelluridjodid oder Diphenylditellurid, enthält.

10. Metallcord für Kraftfahrzeugreifen zur Durchführung des Verfahrens nach mindestens einem der Ansprüche 1, 2, 3, 6 und 8, dadurch gekennzeichnet, daß die einzelnen Drähte des Cords während ihrer Fertigung oder der Cord insgesamt vor dem Vulkanisieren oberflächlich mit Tellur, einer Tellurlegierung, einem Metalltellurid, einer nichtstöchiometrischen Tellurmetallverbindung und/oder einer organischen Tellurverbindung überzogen worden ist.

**Ansprüche** (für den Vertragsstaat AT)

1. Verfahren zum direkten Verbinden von Kautschuk mit Metalloberflächen durch Vulkanisation, dadurch gekennzeichnet, daß als Haftvermittler Tellur, Tellurlegierungen, Metalltelluride, nichtstöchiometrische Tellurmetallverbindungen und/oder organische Tellurverbindungen verwendet werden.

2. Verfahren nach Anspruch 1, dadurch gekennzeichnet, daß eine Kautschukmischung verwendet wird, die neben den für die Vulkanisation üblichen Zusätzen auch Tellur, Metalltelluride, nichtstöchiometrische Tellurmetallverbindungen, Tellurlegierungen und/oder organische Tellurverbindungen enthält.

3. Verfahren nach Anspruch 1, dadurch gekennzeichnet, daß Tellur, Tellurlegierungen, Metalltelluride, nichtstöchiometrische Tellurmetallverbindungen und/oder eine organische Tellurverbindung vor der Vulkanisation auf die Metalloberfläche aufgebracht werden.

4. Verfahren nach Anspruch 1 oder 2, dadurch gekennzeichnet, daß man zu der Kautschukmischung 0,01 bis 5 Gew.% Tellur, Tellurlegierung, Metalltelluride, nichtstöchiometrische Tellurmetallverbindungen und/oder eine organische Tellurverbindung, bezogen auf die Kautschukmischung, zugibt, wobei im Fall von Tellurlegierungen, Metalltelluriden, nichtstöchiometrischen Tellurmetallverbindungen und organischen Tellurverbindungen deren Anteile als Gewichtsprozent Tellur angegeben sind.

5. Verfahren nach einem der vorhergehenden Ansprüche, dadurch gekennzeichnet, daß als Metalltelluride die Telluride von Eisen, Kobalt, Nickel, Kupfer, Wolfram, Blei, Zink, Zinn und Mangan verwendet werden.

6. Verfahren nach einem der vorhergehenden Ansprüche, dadurch gekennzeichnet, daß als organische Tellurverbindungen Telluralkyle, wie Di-n-butyltellur, Diäthyltellur, Dimethyltellur, Dimethyltelluridjodid oder Diphenylditellurid, verwendet werden.

7. Verfahren zur Herstellung einer Kautschukmasse zum Aufvulkanisieren auf Metallmaterial,

6

**0 007 542**

dadurch gekennzeichnet, daß man der Kautschukmasse neben den für die Vulkanisation üblichen Zusatzstoffen 0,01 bis 5,0 Gew.% Tellur, Tellurlegierungen, Metalltelluride, nichtstöchiometrische Tellurmetallverbindungen und/oder organische Tellurverbindungen, bezogen auf die Kautschukmasse, beimischt.

8. Verfahren nach Anspruch 7, dadurch gekennzeichnet, daß man als Metalltelluride die Telluride von Eisen, Kobalt, Nickel, Kupfer, Wolfram, Blei, Zink, Zinn und Mangan verwendet.

9. Verfahren nach Anspruch 7, dadurch gekennzeichnet, daß man als organische Tellurverbindungen Telluralkyle, wie Di-n-butyltellur, Diäthyltellur, Dimethyltellur, Dimethyltelluridjodid oder Diphenylditellurid, verwendet.

10. Metallcord für Kraftfahrzeugreifen zur Durchführung des Verfahrens nach mindestens einem der Ansprüche 1, 2, 3, 6 und 8, dadurch gekennzeichnet, daß die einzelnen Drähte des Cords während ihrer Fertigkung oder der Cord insgesamt vor dem Vulkanisieren oberflächlich mit Tellur, einer Tellurlegierung, einem Metalltellurid, einer nichtstöchiometrischen Tellurmetallverbindung und/oder einer organischen Tellurverbindung überzogen worden ist.

**Claims** (for the Contracting States : BE, FR, GB, IT)

1. A process for directly bonding rubber to metal surfaces by vulcanisation, characterised in that tellurium, tellurium alloys, metal tellurides, non-stoichiometric tellurium-metal compounds and/or organic tellurium compounds are used as adhesion promoters.

2. A process as claimed in Claim 1, characterised in that a rubber mixture is used which, in addition to the usual vulcanisation additives, also contains tellurium, metal tellurides, non-stoichiometric tellurium-metal compounds, tellurium alloys and/or organic tellurium compounds.

3. A process as claimed in Claim 1, characterised in that tellurium, tellurium alloys, metal tellurides, non-stoichiometric tellurium-metal compounds and/or an organic tellurium compound is/are applied to the metal surface before vulcanisation.

4. A process as claimed in Claim 1 or 2, characterised in that from 0.01 to 5 % by weight of tellurium, tellurium alloy, metal tellurides, non-stoichiometric tellurium-metal compounds and/or an organic tellurium compound, based on the rubber mixture, is added to the rubber mixture, the quantities added being expressed as percentages by weight of tellurium in the case of tellurium alloys, metal tellurides, non-stoichiometric tellurium-metal compounds and organic tellurium compounds.

5. A process as claimed in any of the preceding Claims, characterised in that the tellurides of iron, cobalt, nickel, copper, tungsten, lead, zinc, tin and manganese are used as the metal tellurides.

6. A process as claimed in any of the preceding Claims, characterised in that tellurium alkyls, such as di-n-butyl tellurium, diethyl tellurium, dimethyl tellurium, dimethyl telluride iodide or diphenyl ditelluride, are used as the organic tellurium compounds.

7. A rubber mixture for vulcanisation onto metals, characterised in that, in addition to the usual vulcanisation additives, it contains from 0.01 to 5.0 % by weight of tellurium, tellurium alloys, metal tellurides, non-stoichiometric tellurium-metal compounds and/or organic tellurium compounds, based on the rubber mixture, the quantities added being expressed as percentages by weight of tellurium in the case of tellurium alloys, metal tellurides, non-stoichiometric tellurium-metal compounds and organic tellurium compounds.

8. A rubber mixture as claimed in Claim 7, characterised in that it contains the tellurides of iron, cobalt, nickel, copper, tungsten, lead, zinc, tin and manganese as the metal tellurides.

9. A rubber mixture as claimed in Claim 7, characterised in that it contains tellurium alkyls, such as di-n-butyl tellurium, diethyl tellurium, dimethyl tellurium, dimethyl telluride iodide or diphenyl ditelluride, as the organic tellurium compounds.

10. Metal cord for vehicle tyres for carrying out the process claimed in at least one of Claims 1, 2, 3, 6 and 8, characterised in that tellurium, a tellurium alloy, a metal telluride, a non-stoichiometric tellurium-metal compound and/or an organic tellurium compound is applied as a surface coating to the individual wires of the cord during its production or to the cord as a whole before vulcanisation.

**Claims** (for the Contracting State AT)

1. A process for directly bonding rubber to metal surfaces by vulcanisation, characterised in that tellurium, tellurium alloys, metal tellurides, non-stoichiometric tellurium-metal compounds and/or organic tellurium compounds are used as adhesion promoters.

2. A process as claimed in Claim 1, characterised in that a rubber mixture is used which, in addition to the usual vulcanisation additives, also contains tellurium, metal tellurides, non-stoichiometric tellurium-metal compounds, tellurium alloys and/or organic tellurium compounds.

3. A process as claimed in Claim 1, characterised in that tellurium, tellurium alloys, metal tellurides, non-stoichiometric tellurium-metal compounds and/or an organic tellurium compound is/are applied to the metal surface before vulcanisation.

7

4. A process as claimed in Claim 1 or 2, characterised in that from 0.01 to 5 % by weight of tellurium, tellurium alloy, metal tellurides, non-stoichiometric tellurium-metal compounds and/or an organic tellurium compound, based on the rubber mixture, is added to the rubber mixture, the quantities added being expressed as percentages by weight of tellurium in the case of tellurium alloys, metal tellurides, non-stoichiometric tellurium-metal compounds and organic tellurium compounds.

5. A process as claimed in any of the preceding Claims, characterised in that the tellurides of iron, cobalt, nickel, copper, tungsten, lead, zinc, tin and manganese are used as the metal tellurides.

6. A process as claimed in any of the preceding Claims, characterised in that tellurium alkyls, such as di-n-butyl tellurium, diethyl tellurium, dimethyl tellurium, dimethyl telluride iodide or diphenyl ditelluride, are used as the organic tellurium compounds.

7. Process for producing a rubber mixture for vulcanisation onto metals, characterised in that, besides the usual vulcanisation additives, 0.01 to 5.0 % by weight of tellurium, tellurium alloys, metal tellurides, non-stoichiometric tellurium-metal compounds and/or organic tellurium compounds, based on the rubber mixture, are added to the rubber mixture.

8. A process as claimed in Claim 7, characterised in that the tellurides of iron, cobalt, nickel, copper, tungsten, lead, zinc, tin and manganese are used as metal tellurides.

9. A process as claimed in Claim 7, characterised in that the tellurium alkyls, such as di-n-butyl tellurium, diethyl tellurium, dimethyl tellurium, dimethyl telluride iodide or diphenyl ditelluride, are used as organic tellurium compounds.

10. Metal cord for vehicle tyres for carrying out the process claimed in at least one of Claims 1, 2, 3, 6 and 8, characterised in that tellurium, a tellurium alloy, a metal telluride, a non-stoichiometric tellurium-metal compound and/or an organic tellurium compound is applied as a surface coating to the individual wires of the cord during its production or to the cord as a whole before vulcanisation.

**Revendications** (pour les Etats Contractants : BE, FR, GB, IT)

1. Procédé pour lier directement du caoutchouc à des surfaces métalliques par vulcanisation, caractérisé par le fait que l'on utilise comme agent d'accrochage le tellure, des alliages de tellure, des tellurures métalliques, des composés tellure-métal non stœchiométriques et/ou des composés organiques de tellure.

2. Procédé selon la revendication 1, caractérisé par le fait que l'on utilise un mélange de caoutchouc qui, outre les additifs usuels pour la vulcanisation, contient également du tellure, des tellurures métalliques, des composés tellure-métal non stœchiométriques, des alliages de tellure et/ou des composés organiques de tellure.

3. Procédé selon la revendication 1, caractérisé par le fait que l'on applique sur la surface métallique, avant la vulcanisation, du tellure, des alliages de tellure, des tellurures métalliques, des composés tellure-métal non stœchiométrique et/ou un composé organique de tellure.

4. Procédé selon la revendication 1 ou 2, caractérisé par le fait que l'on ajoute au mélange de caoutchouc, 0,01 à 5 % en poids de tellure, d'alliage de tellure, de tellurures métalliques, de composés tellure-métal non stœchiométriques et/ou un composé organique de tellure, rapporté au mélange de caoutchouc, les proportions étant indiquées, dans le cas des alliages de tellure, des tellurures métalliques, des composés tellure-métal non stœchiométriques et des composés organiques de tellure, sous la forme du pourcentage en poids de tellure.

5. Procédé selon l'une des revendications précédentes, caractérisé par le fait qu'on utilise comme tellurures métalliques, les tellurures de fer, de cobalt, de nickel, de cuivre, de tungstène, de plomb, de zinc, d'étain et de manganèse.

6. Procédé selon l'une des revendications précédentes, caractérisé par le fait qu'on utilise comme composés organiques de tellure, des alkyltellures comme le di-n-butyltellure, le diéthyltellure, le diméthyltellure, le tellure-iodure de diméthyle ou le ditellurure de diphényle.

7. Masse de caoutchouc pour la vulcanisation sur un matériau métallique, caractérisée par le fait qu'outre les additifs usuels pour la vulcanisation, elle contient 0,01 à 5,0 % en poids de tellure, d'alliages de tellure, de tellurures métalliques, de composés tellure-métal non stœchiométriques et/ou de composés organiques de tellure, rapportés à la masse de caoutchouc, les proportions étant indiquées, dans le cas des alliages de tellure, des tellurures métalliques, des composés tellure-métal non stœchiométriques et des composés organiques de tellure, sous la forme du pourcentage en poids de tellure.

8. Masse de caoutchouc selon la revendication 7, caractérisée par le fait qu'elle contient comme tellurures métalliques, les tellurures de fer, de cobalt, de nickel, de cuivre, de tungstène, de plomb, de zinc, d'étain et de manganèse.

9. Masse de caoutchouc selon la revendication 7, caractérisée par le fait qu'elle contient comme composés organiques de tellure, des alkyltellures comme di-n-butyltellure, le diéthyltellure, le diméthyltellure, le tellure-iodure de diméthyle ou de ditellurure de diphényle.

10. Câblé métallique pour pneus de véhicules automobiles pour la mise en œuvre du procédé selon au moins l'une des revendications 1, 2, 3, 6 et 8, caractérisé par le fait que les différents fils du câblé pendant leur fabrication, ou le câblé dans son ensemble avant la vulcanisation, ont été revêtus superficiellement de tellure, d'un alliage de tellure, d'un tellurure métallique, d'un composé tellure-métal non stœchiométrique et/ou d'un composé organique de tellure.

**Revendications** (pour l'Etat Contractant AT)

1. Procédé pour lier directement du caoutchouc à des surfaces métalliques par vulcanisation, caractérisé par le fait que l'on utilise comme agent d'accrochage le tellure, des alliages de tellure, des tellurures métalliques, des composés tellure-métal non stœchiométriques et/ou des composés organiques de tellure.

2. Procédé selon la revendication 1, caractérisé par le fait que l'on utilise un mélange de caoutchouc qui, outre les additifs usuels pour la vulcanisation, contient également du tellure, des tellurures métalliques, des composés tellure-métal non stœchiométriques, des alliages de tellure et/ou des composés organiques de tellure.

3. Procédé selon la revendication 1, caractérisé par le fait que l'on applique sur la surface métallique, avant la vulcanisation, du tellure, des alliages de tellure, des tellurures métalliques, des composés tellure-métal non stœchiométrique et/ou un composé organique de tellure.

4. Procédé selon la revendication 1 ou 2, caractérisé par le fait que l'on ajoute au mélange de caoutchouc, 0,01 à 5 % en poids de tellure, d'alliage de tellure, de tellurures métalliques, de composés tellure-métal non stœchiométriques et/ou un composé organique de tellure, rapporté au mélange de caoutchouc, les proportions étant indiquées, dans le cas des alliages de tellure, des tellurures métalliques, des composés tellure-métal non stœchiométriques et des composés organiques de tellure, sous la forme du pourcentage en poids de tellure.

5. Procédé selon l'une des revendications précédentes, caractérisé par le fait qu'on utilise comme tellurures métalliques, les tellurures de fer, de cobalt, de nickel, de cuivre, de tungstène, de plomb, de zinc, d'étain et de manganèse.

6. Procédé selon l'une des revendications précédentes, caractérisé par le fait qu'on utilise comme composés organiques de tellure, des alkyltellures comme le di-n-butyltellure, le diéthyltellure, le diméthyltellure, le tellure-iodure de diméthyle ou le ditellurure de diphényle.

7. Procédé pour la préparation d'une masse de caoutchouc pour la vulcanisation sur un matériau métallique, caractérisé par le fait qu'outre les additifs usuels pour la vulcanisation on ajoute à la masse de caoutchouc 0,01 à 5,0 % en poids de tellure, d'alliages de tellure, de tellurures métalliques, de composés tellure-métal non stœchiométriques et/ou de composés organiques de tellure, rapportés à la masse de caoutchouc.

8. Procédé selon la revendication 7, caractérisé par le fait qu'on applique comme tellurures métalliques, les tellurures de fer, de cobalt, de nickel, de cuivre, de tungstène, de plomb, de zinc, d'étain et de manganèse.

9. Procédé selon la revendication 7, caractérisé par le fait qu'on applique comme composés organiques de tellure, des alkyltellures comme di-n-butyltellure, le diéthyltellure, le diméthyltellure, le tellurure-iodure de diméthyle ou de ditellurure de diphényle.

10. Câblé métallique pour pneus de véhicules automobiles pour la mise en œuvre du procédé selon au moins l'une des revendications 1, 2, 3, 6 et 8, caractérisé par le fait que les différents fils du câblé pendant leur fabrication, ou le câblé dans son ensemble avant la vulcanisation, ont été revêtus superficiellement de tellure, d'un alliage de tellure, d'un tellurure métallique, d'un composé tellure-métal non stœchiométrique et/ou d'un composé organique de tellure.